# EUROPÄISCHE PATENTSCHRIFT

(11) **EP 2 149 043 B1**
(45) Veröffentlichungstag und Bekanntmachung des Hinweises auf die Patenterteilung: **27.08.2014**
(21) Anmeldenummer: 08758667.3
(22) Anmeldetag: 21.05.2008
(51) Int. Cl.: G01N 23/22, G01N 1/10, G01N 1/28, G01N 1/40

(54) **VERFAHREN FÜR DIE PROBENPRÄPARATION FLÜSSIGER ODER PASTÖSER STOFFE ZUR MESSUNG MITTELS RÖNTGENFLUORESZENZ UND DAFÜR GEEIGNETER PROBENKÖRPER**
METHOD FOR THE SAMPLE PREPARATION OF LIQUID OR PASTE-LIKE SUBSTANCES FOR MEASUREMENTS WITH X-RAY FLUORESCENCE AND SAMPLE BODIES SUITED THEREFOR
PROCÉDÉ VISANT À PRÉPARER UN ÉCHANTILLON DE MATIÈRE FLUIDE OU PÂTEUSE DESTINÉE À ÊTRE MESURÉ PAR FLUORESCENCE X ET ÉLÉMENT D'ANALYSE D'ÉCHANTILLON APPROPRIÉ À UN TEL PROCÉDÉ

(30) Priorität: 21.05.2007 DE 102007023793; 17.08.2007 DE 102007039000
(43) Veröffentlichungstag der Anmeldung: 03.02.2010
(73) Patentinhaber: Terrachem GMBH, 68219 Mannheim (DE)
(72) Erfinder: RÜTTIMANN, Fredy, 68219 Mannheim (DE)
(74) Vertreter: Stößel, Matthias
(86) Internationale Anmeldenummer: PCT/EP2008/004061
(87) Internationale Veröffentlichungsnummer: WO 2008/141812

(56) Entgegenhaltungen:
- GB-A- 1 088 602
- JP-A- 2004 093 272
- US-A- 4 788 700
- US-A- 6 012 325
- FONTAS ET AL: "Novel and selective procedure for Cr(VI) determination by X-ray fluorescence analysis after membrane concentration" SPECTROCHIMICA ACTA. PART B: ATOMIC SPECTROSCOPY, NEW YORK, NY, US, US, Bd. 61, Nr. 4, 1. April 2006 (2006-04-01), Seiten 407-413, XP005515249 ISSN: 0584-8547

## Beschreibung

Mittels Röntgenfluoreszenzanalyse (RFA) lassen sich alle chemischen Elemente von Bor bis Uran mit sehr großer Genauigkeit anhand ihrer elementcharakteristischen Röntgenstrahlung bestimmen. Zur Anregung dieser Strahlung muß energiereiche Strahlung, z.B. in Form von (primärer) Röntgenstrahlung, auf das zu untersuchende Präparat gerichtet werden. Dabei werden Elektronen aus den inneren Schalen der darin enthaltenen Elemente herausgerissen. Bei der Wiederauffüllung dieser Elektronenlöcher durch Elektronen weiter außenliegender Schalen wird Energie frei, die als (sekundäre) Röntgenstrahlung mit einer für das betreffende Element charakteristischen Energie bzw. Wellenlänge emittiert wird.

Die emittierte Sekundärstrahlung kann auf Vorhandensein verschiedener Elemente untersucht werden. Bei der energiedispersiven Methode (EDXRF) geschieht dies für alle zu messenden Elemente in einem Meßgang, bei dem die Energien der Sekundärstrahlung elektronisch gemessen werden. Bei der wellenlängendispersiven Methode (WDXRF) wird die emittierte Sekundärstrahlung jeweils elementspezifisch an einem Analysatorkristall gebeugt und quantitativ oder qualitativ gemessen, so daß für die Bestimmung mehrerer Elemente mehrere Meßgänge erforderlich sind.

Solche Untersuchungen werden in verschiedenen Bereichen der Elementanalytik eingesetzt. Weit verbreitet sind diese Methoden in Geologie, Umwelt und Produktionskontrollen aller Art. Es können sowohl Haupt- als auch Neben- und Spurenelemente bestimmt werden. Beispiele sind Messungen an Gläsern, Keramik, Öl, Fett und dergleichen.

Das Probenmaterial kann in festem oder flüssigem bzw. pastösem Zustand untersucht werden. In flüssigen oder pastösen Stoffen können die zu messenden chemischen Elemente sowohl gelöst als auch suspensiert in der Flüssigkeit enthalten sein. Voraussetzung für eine aussagefähige Messung ist eine möglichst homogene Verteilung der zu messenden Elemente innerhalb der Probe. Feste Stoffe werden üblicherweise nach Pulverisierung als Preßlinge oder Schmelzkörper für die Untersuchung präpariert, die zur Bestrahlung und Messung in die Meßapparatur eingesetzt werden. Der Meßvorgang erfolgt im Vakuum, um Energieverluste zu vermeiden. Relevant ist dabei auch die Entfernung zwischen Strahlenquelle und Untersuchungssubstrat, da mit zunehmender Entfernung Strahlungsverluste eintreten. Eine glatte Oberfläche des Probekörpers als Meßfläche ist daher erforderlich, da geringste Niveauunterschiede Meßungenauigkeiten verursachen können.

Flüssige und pastöse Stoffe werden üblicherweise in eine sogenannte Küvette, eine Art offenen Kunststoffzylinder, gefüllt, wobei die untere Öffnung mit einer dünnen Folie abgeschlossen wird. Diese Küvetten werden dann wie die Preßlinge oder Schmelzkörper in die Probenträger der Meßapparatur eingesetzt, wobei sowohl die Anregungsstrahlung als auch die erzeugte, zu messende Sekundärstrahlung die Folie durchdringen müssen. Es handelt sich dabei um eine speziell für diese Analysemethode hergestellte Folie. Sie muß stabil genug sein, um die Flüssigkeit auf einer planen Ebene zu halten. Sie muß auch dünn genug sein, um noch ausreichend Anregungs- bzw. Sekundärstrahlung hindurchzulassen.

Da das üblicherweise zur Messung verwendete Vakuum die zu messenden Flüssigkeiten zum Sieden bringen und auf die Folie zu starke Kräfte ausüben würde, werden solche Proben statt unter Vakuum unter Helium gemessen. Dies hat den Nachteil, daß die Heliumatome bereits einen gewissen Strahlungsverlust verursachen. Die erzeugte Sekundärstrahlung wird darüber hinaus zusätzlich durch die Folie beeinträchtigt, denn die Sekundärstrahlung der leichten Elemente des Periodensystems von Bor bis Fluor kann die Folie nicht mehr durchdringen. Die "Austrittstiefe" von Natrium liegt z.B. bei 4 µm, die der noch leichteren Elemente im Periodensystem entsprechend niedriger. Eine in der RFA üblicherweise verwendete Folie weist eine Dicke von 4-6 µm. auf. Damit ist die Messung der leichten Elemente (im Periodensystem) von Bor bis einschließlich Fluor mit dieser Verfahrensweise nicht möglich. Bei den im Periodensystem nachfolgenden leichten Elementen Natrium und Magnesium treten immer noch so große Energieverluste auf, daß sie als Spurenbestandteile nur ungenau erfaßt werden können.

Ein weiterer Nachteil der beschriebenen Verfahrensweise besteht darin, daß durch die Anregungsstrahlung die Probe und damit auch die Folie erwärmt wird, was eine Ausdehnung und damit ein "Durchhängen" der Folie zur Folge hat. Der so verringerte Abstand zwischen Strahlenquelle und Probe führt zu zusätzlichen Meßungenauigkeiten. Die Folge ist, daß bei Röntgenfluoreszenzanalysen von flüssigen oder pastösen Stoffen bisher nur Messungen der Elemente ab Aluminium (Nr. 13 im Periodensystem) zuverlässig durchführbar sind.

Es ist auch bekannt, flüssige Proben statt dessen auf Filtermaterial aufzutragen, um sie einer Messung unter Vakuum zuführen zu können. Dies hat jedoch den Nachteil, daß Filtermaterial eine inhomogene, d.h. rauhe Oberfläche hat, die außerdem dazu neigt, sich bei Flüssigkeitsauftrag zu wellen und daher zu Meßungenauigkeiten führt. Ferner ist ein solches Filtermaterial nicht für mehrere bzw. länger andauernde Meßvorgänge geeignet, weil es durch den Meßvorgang beschädigt wird. Damit sind längerandauernde Meßvorgänge, wie bei der wellenlängendispersiven Methode, nicht möglich.

Die DE 43 90 935 C2 beschreibt ein Verfahren zum Messen von Umgebungsatmosphäre, bei der Probenkörper aus Metall oder Keramik (porös, aus Partikeln oder fest) über einen langen Zeitraum von 24 Stunden bis hin zu 30 Tagen einer definierten Atmosphäre ausgesetzt werden, damit diese die zu messenden Atmosphärenbestandteile (NOₓ, CO₂ und SO₂) ausreichend (physikalisch und/oder chemisch) binden. Dieses Verfahren ist ausschließlich auf die Messung von gasförmigen Proben auf die genannten Bestandteile ausgerichtet und eignet sich daher nicht für die Messung beliebiger Elemente, insbesondere nicht in flüssigen bis pastösen Stoffen.

Die DE 196 18 773 C1 offenbart unter Nennung weiterer Schriften eine Methode zur Probenvorbereitung von eindampfbaren Flüssigkeiten für die RFA auf einem dünnen Probenträgermaterial. Dabei werden die eingedampften Flüssigkeiten als Schicht auf dem Probenträger dem Meßverfahren zugeführt. Die Beschichtung wird dadurch erreicht, daß ein Flüssigkeitstropfen auf eine sehr dünne, flexible, aber reißfeste und thermisch stabile Polymerfolie aufgetragen und mittels einer Heizvorrichtung getrocknet wird. Das offenbarte Verfahren will dabei die Aufgabe lösen, eine zuverlässige Probengeometrie während des Trockenvorgangs zu erreichen. Für diese Methode wird im Bereich der Schwermetalle eine verbesserte Nachweisgrenze von unter 10 ppm (statt bisher 10 ppm) und eine Reduktion des Streustrahlungs- und Fluoreszenzuntergrunds angegeben, wobei unklar bleibt, wie weit die Nachweisgrenze tatsächlich unterschritten wird.

Als Polymerfolie wird ein Band beschrieben, wie es auch für die Herstellung von Video- und Audiobändern bekannt ist. Das Band wird dabei zwischen zwei Spulen geführt, wobei das Band nach Auftragung der Probe durch ein regelbares Pumpensystem zur Trocknung der aufgetragenen Probe über eine Heizvorrichtung geführt wird. Diese umfaßt einen Heiztisch mit einer Präparierplatte, die feine Löcher aufweist und an deren Unterseite eine Vakuumpumpe anschließbar ist, um das Probenträgerband an die Präparierplatte anzusaugen. Die Präparierplatte weist ferner eine Struktur auf der dem Band zugewandten Seite auf, die dazu dient, dem Band während des Trockenprozesses durch Vakuumeinwirkung ein Relief zur besseren Positionierung der Probe einzuprägen.

Diese Methode hat den Nachteil, daß sie technisch aufwendig und somit teuer in der Ausführung ist. Sie eignet sich ferner nur für gut verdampfbare Flüssigkeiten. Insbesondere für pastöse Stoffe, die sich schlecht verdampfen lassen und zur Filmbildung neigen, wie beispielsweise Schmieröle, ist diese Methode weniger geeignet. Auch ist der erreichbaren Schichtdicke der Probe und damit der Meßqualität und der unteren Nachweisgrenze weiterhin eine Grenze gesetzt. Dazu trägt auch bei, daß aufgrund der Verwendung eines kontinuierlichen Probenträgerbands für eine Messung unter Vakuum eine technisch aufwendige Konstruktion erforderlich wäre.

Aufgabe der Erfindung ist daher, ein Verfahren für die Probenvorbereitung flüssiger bis pastöser Stoffe bereitzustellen, das die Nachteile des Standes der Technik überwindet.

Dies wird durch ein Verfahren gemäß Anspruch 6 erreicht.

Dies hat den Vorteil, daß keine besonderen technischen Vorrichtungen zur Trocknung und Positionierung der Probe notwendig sind und damit die Bereitstellung einer reproduzierbaren Probe mit flüssigen bis pastösen Stoffen für die RFA gleichermaßen auf einfache Weise möglich ist. Damit können flüssige bis pastöse Proben unter den gleichen technischen Bedingungen wie die Preßlinge oder Schmelzkörper fester Proben gemessen werden, was insbesondere auch die Verwendung von Vakuum bei der Messung bedeutet. Dies erlaubt eine einheitliche Konstellation der Meßvorrichtung sowie eine einheitliche Arbeitsweise bei der Messung, unabhängig von der Konsistenz der Probensubstrate von fest bis flüssig. Ein weiterer Vorteil besteht darin, daß durch die Durchtränkung des Probenkörpers als Folge der Ad- und Absorption der Probe eine größere zu bestrahlende und zu messende Schichtdicke erreicht wird. Hierdurch kann die Meßqualität solcher Proben deutlich verbessert werden: Insbesondere ist die untere Nachweisgrenze von Schwermetallen gegenüber dem Stand der Technik deutlich verringert (ca. 1 ppm gegenüber ca. 10 ppm), die Meßbarkeit der leichten Elemente im Periodensystem von Bor bis einschließlich Fluor wird überhaupt erst ermöglicht, und die Messung von Natrium und Magnesium ist zuverlässig durchführbar.

Eine vorteilhafte Ausgestaltung des Verfahrens sieht vor, einen Probenkörper aus einem Material zu verwenden, dessen Saugfähigkeit so beschaffen ist, daß die aufgetragenen Stoffe, insbesondere die flüssigen Anteile, auch unter Vakuum im Probenkörper gehalten bleiben. Diese "vakuumfeste" Halte- oder Bindungsfähigkeit kann auf verschiedenen alternativen oder sich ergänzenden Prinzipien beruhen, wesentlich ist, daß der aufgesogene Stoff unter Vakuum nicht wieder austritt. Auf diese Eigenschaft wird im Zusammenhang mit dem erfindungsgemäßen Probenkörper noch weiter eingegangen. Diese vakuumfeste Halte- oder Bindungsfähigkeit hat den Vorteil, daß einer solchermaßen vorbereitete Probe unmittelbar, d.h. ohne weitere Vorbereitungsschritte, wie z.B. eine Trocknung, der Bestrahlung und Messung zugeführt werden kann.

Eine vorteilhafte Weiterbildung des Verfahrens, insbesondere für die Messung nichtbrennbarer suspensierter Elemente, sieht vor, den Probenkörper vor der Messung einer Hitzebehandlung zu unterziehen, um die Flüssigkeit, insbesondere wenn sie als aufliegende (adsorbierte) Schicht (Film) die zu messenden Elementpartikel auf der Meßoberfläche abdeckt, durch Verbrennung zu entfernen. Dies hat den Vorteil, daß eine exakte Messung nichtbrennbarer suspensierter Elementpartikel auch bei Suspensionen mit pastösen und wenig flüchtigen Flüssigkeiten möglich ist, wie beispielsweise bei Metallabrieben in Schmierölen.

Voraussetzung für ein solches Verfahren sind geeignete Probenkörper, die in diesem Verfahren zur Anwendung kommen können. Die Probenkörper müssen eine starre Konsistenz aufweisen, um eine stabile Meßoberfläche zu gewährleisten. Diese Meßoberfläche muß ferner eben und insbesondere glatt sein, um das Meßergebnis nicht zu beeinträchtigen. Ferner müssen sie dazu geeignet sein, flüssige bis pastöse Stoffe gleichmäßig zu ad- und absorbieren. Eine weitere Aufgabe der Erfindung ist es daher, einen Probenkörper bereitzustellen, der diese Anforderungen erfüllt. Dies wird dadurch erreicht, daß der Probenkörper aus einem saugfähigem Material besteht. Der Vorteil eines solchen Probenkörpers ist, daß ein Verfahren der oben beschriebenen Art mit den dort aufgeführten Vorteilen ermöglicht wird.

Eine besonders vorteilhafte Ausgestaltung sieht vor, daß der Probenkörper aus einem Material besteht, das flüssige bis pastöse Stoffe so gut halten bzw. binden kann, das sie auch unter Vakuum im Probenkörper gehalten und/oder gebunden bleiben. Diese "vakuumfeste" Halte- und/oder Bindungswirkung kann auf physikalischem und/oder chemischem Wege erzielt werden. Wesentlich ist die Stabilität der Halte- und/oder Bindungskraft, die auch einem Vakuum gegenüber Bestand hat. Zu den Mitteln, mit denen eine solche Wirkung erzielt werden kann, gehören neben der Feinstrukturierung des Körpers und seinen Kapillarkräften auch die chemischen Eigenschaften der verwendeten Materialien, wie die Fähigkeit, Flüssigkeit einzulagern (Intercalationsverbindung) oder auf sonstige Weise zu binden. Eine derartige Einlagerungsmöglichkeit wird beispielsweise durch Verwendung eines Probenkörpers aus Tonmineralien erreicht, dessen Material positiv und negativ geladene chemische Strukturanteile besitzt. Stoffe, deren Moleküle einen elektrischen Dipol-Charakter aufweisen, wie z.B. Wasser, Fette, Öle und andere dipolare Flüssigkeiten, können sich mit ihren Molekülen an die entsprechend gegensätzlich geladenen Strukturanteile des Tonminerals anlagern.

Gemäß der Erfindung ist der Probenkörper ein Preßling aus Granulat. Damit ist er auf einfache Weise, nämlich durch Pressung in einer vorgeformten Preßvorrichtung, herstellbar. Ein solcher Probenkörper weist bei entsprechend feiner Körnung trotz feinster Porosität noch eine ausreichend glatte Oberfläche auf. Die granulären Partikel können bei entsprechender chemischer oder mineralischer Beschaffenheit flüssige oder pastöse Stoffe besonders gut in ausreichender Menge gleichmäßig in sich aufnehmen, nachdem der Stoff über die Oberfläche in die Zwischenräume des Probenkörpers gesogen wurde.

Geeignete Materialien für solche Granulate sind beispielsweise Tonmineralien oder auch Böhmit. Wesentlich ist dabei, daß sie die geforderte Saugfähigkeit und eine glatte Oberfläche bilden können. Vorzugsweise werden solche Materialen verwendet, die auch eine "vakuumfeste" Halte- bzw. Bindungswirkung aufweisen. Vorteilhaft ist es, wenn sie entweder keine, nur geringe oder zumindest nur definierte Verunreinigungen aufweisen, um Verfälschungen von Meßergebnissen zu vermeiden.

Die genannten Ausführungen des Verfahrens und des Probenkörpers stellen nur Beispiele dar. Weitere geeignete Ausgestaltungen des Verfahrens sowie des Probenkörpers sind denkbar.

Das Verfahren und der Probenkörper wird anhand der Zeichnung erläutert. Es zeigen:
- Fig. 1a: das Auftragen des zu messenden flüssigen oder pastösen Stoffs auf den Probenkörper (Schritt 1 des Verfahrens) in schematischer Übersicht,
- Fig. 1b: einen Probenkörper nach dem Ad- und Absorption des aufgetragenen Stoffs (Schritt 2 des Verfahrens) in schematischer Übersicht,
- Fig. 2a: eine detailliertere Sicht von Fig. 1b im Schnitt (schematischer Ausschnitt),
- Fig. 2b: den Probenkörper aus Fig. 2a nach der Hitzebehandlung gemäß Anspruch 3
- Fig. 3 bis 9: Eichkurven mit den beispielhaften Elementen Bor, Magnesium, Titan, Mangan, Eisen, Nickel und Zinn

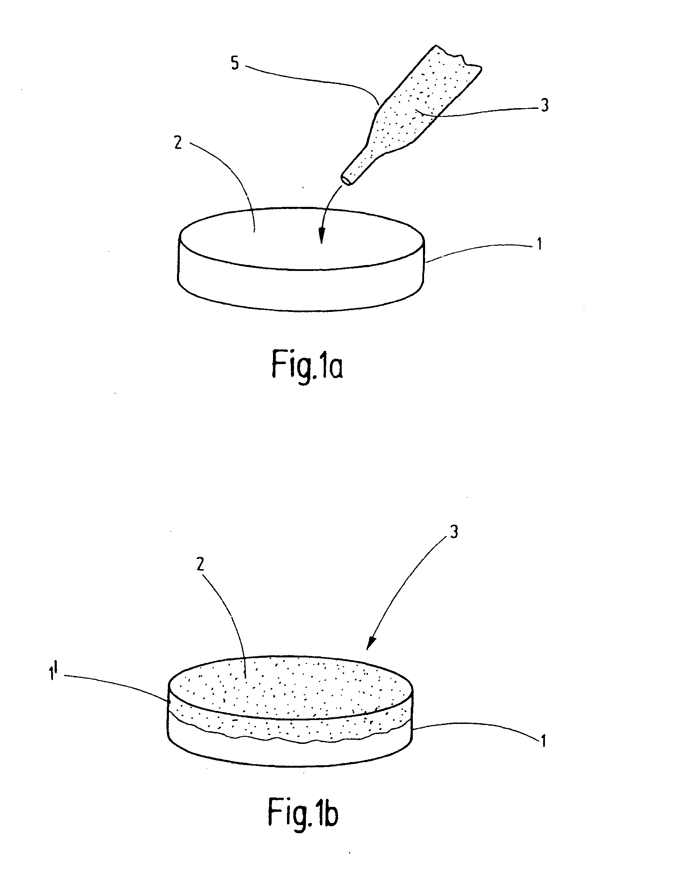

**Fig. 1a** zeigt das Auftragen des flüssigen oder pastösen Stoffs 3 auf einen Probenkörper 1 (Schritt 1 des erfindungsgemäßen Verfahrens) mit einer Pipette 5. Der Probenkörper 1 weist in dem abgebildeten Beispiel eine runde Form auf wie die üblichen Preßlinge oder Schmelzkörper. Er kann jedoch auch beliebige andere Formen aufweisen, wie sie sich für die Verwendung in RFA-Vorrichtungen eignen. Das Auftragen des Stoffes mit Hilfe einer Pipette 5 stellt nur eine beispielhafte Möglichkeit dar. Selbstverständlich sind auch andere Auftragungsmöglichkeit denkbar.

**Fig. 1b** zeigt den Probenkörper 1, 1' nach Ad- und Absorption des Stoffs 3 in den Probenkörper 1 (Schritt 2) in schematischer Übersicht, wobei im dargestellten Beispiel der durchtränkte Bereich 1' zur besseren Darstellung nur einen Teil des Probenkörpers 1 umfaßt. Selbstverständlich kann auch der gesamte Probenkörper 1 vom Stoff 3 durchtränkt werden. Die in dem aufgesogenen Stoff 3 enthaltenen zu messenden Elemente (gelöst und/oder suspensiert) sind nicht dargestellt. Zur Messung gelangen dabei sowohl die im Bereich der Meßoberfläche 2 befindlichen Elemente wie auch diejenigen, die in das Innere des Probenkörpers aufgesogen sind. Die Tiefe, bis zu der aufgesogene Elemente gemessen werden können, hängt mit der Stellung des Elementes im Periodensystem, d.h. mit seinem eigenen Energiepotential zusammen. Je "schwerer" eine Element, desto mehr Energie kann ein solches Element durch die Röntgenstrahlung freisetzen und damit eine größere Reichweite seiner abgegebenen Sekundärstrahlung erlangen.

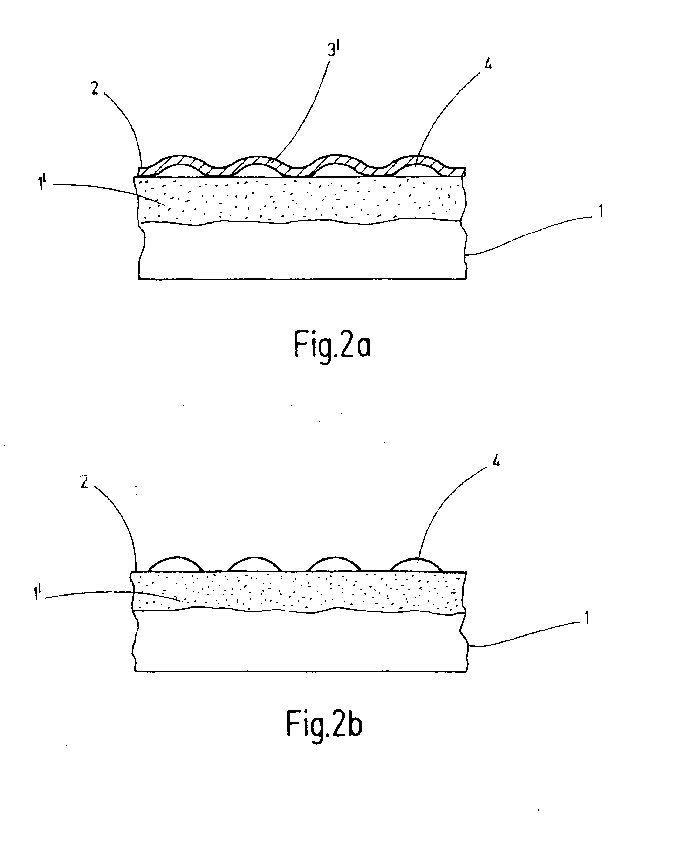

**Fig. 2a** zeigt eine detailliertere Sicht von Fig. 1b, also einen Probenkörper 1,1' nach Auftrag und Ad- und Absorption des Stoffes 3 mit suspensierten Elementpartikeln 4. Elementpartikel 4, die auf der Meßoberfläche 2 liegen, weisen eine darüberliegende Stoffschicht, einen Stoff-Film 3', auf.

**Fig. 2b** zeigt in gleicher Detaillierung wie Fig. 2a einen Probenkörper 1, 1' nach einer Hitzebehandlung gemäß Anspruch 2. Der Stoff-Film 3' wurde durch die Hitzebehandlung verbrannt, so daß die zu messenden suspensierten Elementpartikel 4 frei auf der Meßfläche 2 liegen.

Diese Darstellungen sind rein schematisch, insbesondere sind die Größenverhältnisse nicht maßstabsgetreu. Die erforderliche Form der Probenkörper ergibt sich aus der für die Messung verwendeten Meßvorrichtungen. Üblich sind runde, "tablettenförmige" Probenkörper. Die gewünschte Form (und Größe) wird durch die Form der verwendeten Preßvorrichtungen erreicht. Wesentlich ist, daß eine glatte Meßfläche vorliegt.

Die als geeignet beschriebenen und beanspruchten Probekörpersubstrate sind nur Beispiele. Selbstverständlich sind auch weitere Substrate gut geeignet, wie Appatit oder Tricalziumphosphat.

### Beispiele

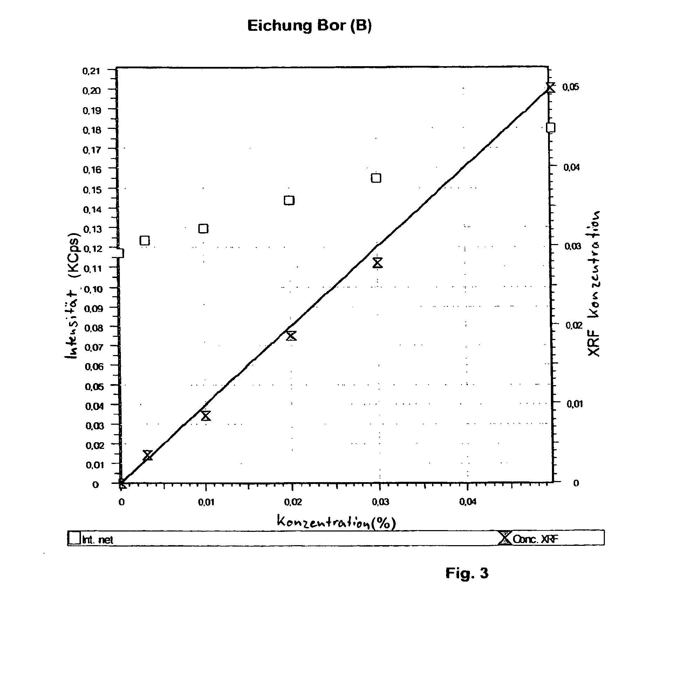

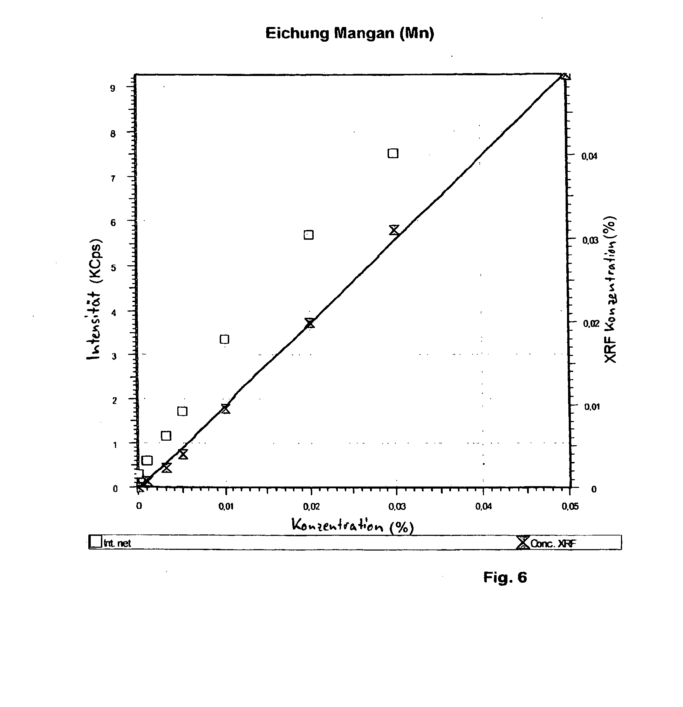

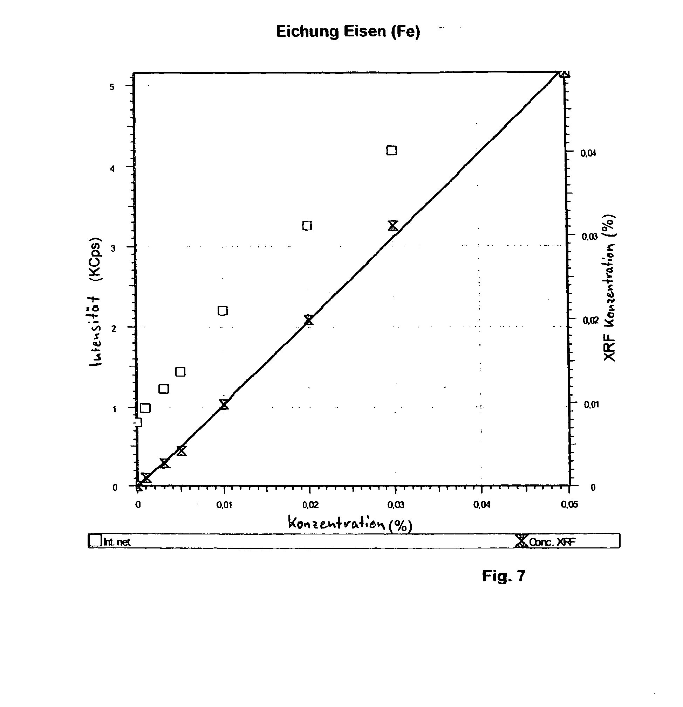

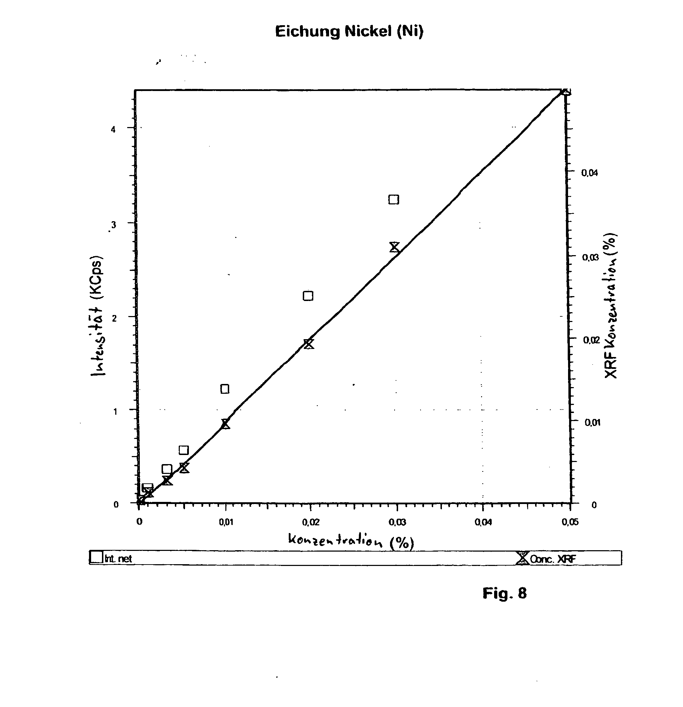

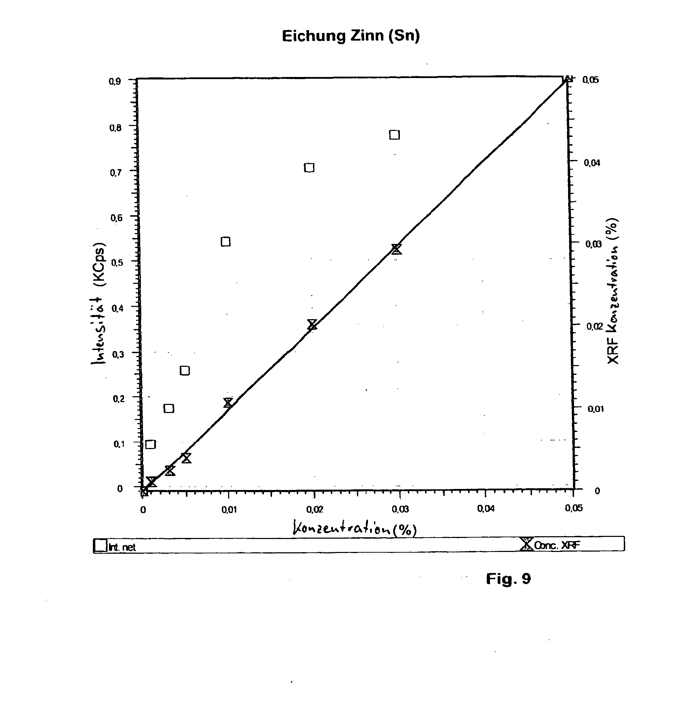

Die **Fig. 3 bis 9** zeigen Eichkurven für beispielhaft ausgewählte Elemente. Für die Messungen nach der erfindungsgemäßen Methode wurden Probenkörper aus Böhmit (A1(OH)O) verwendet, auf die jeweils 150 mg der Eichsubstanzen zur Messung aufgetragen wurde. Die Probenkörper wurden aus jeweils 4 g Böhmit als Preßlinge von 40 mm Durchmesser hergestellt und der RFA-Messung unter Vakuum zugeführt. In den tabellarischen Darstellungen der konkreten Meßwerte werden folgende Abkürzungen und Bezeichnungen verwendet:

| | |
|---|---|
| Standard Name | Bezeichnung der Probe |
| Int.Net | Gemessene Netto Intensitäten (Peak - Untergrund) |
| Conc.Chem | Konzentrationen der verwendeten Standards |
| Conc.XRF | Errechnete Konzentrationen der Standards an der Eichkurve |
| Abs.Dev. | Absolute Standardabweichung |
| Re.Dev. | Relative Standardabeichung |
| LLD (ppm) | Lower Level Detection = Untere Nachweisgrenze in ppm (1 ppm = 0,0001 %) |
| Kcps | Impulsrate der gemessenen Intensitäten (Kilo counts per second) |

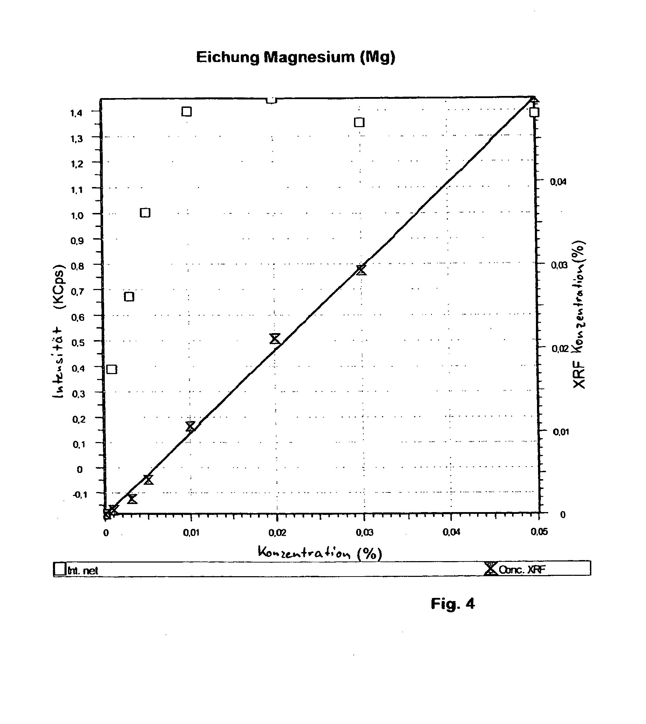

**Fig. 3** **und** **4** zeigen Eichkurven für die leichten Elemente Bor (B) und Magnesium (Mg), für die RFA-Messungen nach herkömmlichen Verfahren gar nicht (Bor) oder nur sehr schlecht (Magnesium) möglich waren. Die konkret dargestellten Eichwerte für diese beiden Elemente sind in den folgenden **Tabellen 1 und 2** aufgeführt. In der linken Spalte wird das Element und die Figur aufgeführt, auf die sich die jeweilige Tabelle bezieht.

**Tabelle 1**

| **B** | **Standard Name** | **Int.Net.** | **Conc.Chem.** | **Conc.XRF** | **Abs.Dev.** | **Rel.Dev.** | **LLD (PPM)** |
|---|---|---|---|---|---|---|---|
| (Fig. 3) | HP14-Null | 0,117 | 0,000 | 0,000 | -0,0002 | | 60 |
| | HP14-30ppm | 0,123 | 0,003 | 0,003 | 0,0004 | 14,030 | 63,1 |
| | HP14-100ppm | 0,130 | 0,010 | 0,009 | -0,0015 | -14,530 | 66,2 |
| | HP14-200ppm | 0,144 | 0,020 | 0,019 | -0,0014 | -7,050 | 69,5 |
| | HP14-300ppm | 0,155 | 0,030 | 0,028 | -0,0021 | -7,040 | 72,7 |
| | HP14-500ppm | 0,180 | 0,050 | 0,050 | -0,0002 | -0,400 | 78,1 |

**Tabelle 2**

| **Mg** | **Standard Name** | **Int.Net.** | **Conc.Chem.** | **Conc.XRF** | **Abs.Dev.** | **Rel.Dev.** | **LLD (PPM)** |
|---|---|---|---|---|---|---|---|
| (Fig. 4) | HP14-Null | -0,1863 | 0,0000 | 0,0000 | 0,10 | | 0,4 |
| | HP14-10ppm | 0,3898 | 0,0010 | 0,0006 | -4,00 | | 0,8 |
| | HP14-30ppm | 0,6725 | 0,0030 | 0,0019 | -11,00 | -36,72 | 1,8 |
| | HP14-50ppm | 1,0040 | 0,0050 | 0,0042 | -8,10 | -16,13 | 2,7 |
| | HP14-300ppm | 1,3524 | 0,0100 | 0,0294 | -5,60 | -1,86 | 14,6 |
| | HP14-500ppm | 1,3866 | 0,0200 | 0,0497 | -2,70 | -0,53 | 24,3 |
| | HP14-100ppm | 1,3957 | 0,0300 | 0,0107 | 7,00 | 7,05 | 5,1 |
| | HP14-200ppm | 1,4438 | 0,0500 | 0,0213 | 12,50 | 6,23 | 9,8 |

Diese in den Tabellen 1 und 2 und den Fig. 3 und 4 dargestellten Werte und Kurven zeigen, daß das Element Bor, das bisher nicht mit der RFA nachgewiesen werden konnte, mit dem erfindungsgemäßen Verfahren und dem erfindungsgemäßen Probenkörper ab einer unteren Nachweisgrenze von ca. 60 ppm meßbar ist. Für das ebenfalls leichte Element Magnesium, das bisher nur unzuverlässig meßbar war, wird eine Nachweisgrenze von 0,4 ppm erreicht.

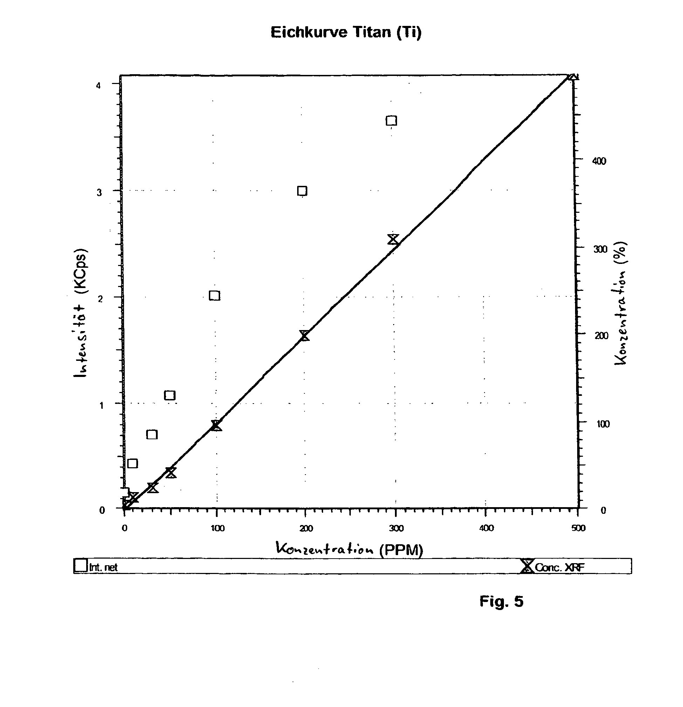

Die **Fig. 5 bis 9** zeigen Beispiele von Eichkurven für schwerere Elemente (Schwermetalle) Titan (Ti), Mangan (Mn), Eisen (Fe), Nickel (Ni) und Zinn (Sn) in aufsteigender Reihenfolge ihrer Anordnung im Periodensystem. In den folgenden **Tabellen 3 bis 7** werden hierzu ebenfalls die konkreten Meßwerte aufgeführt. Dabei werden für die untere Nachweisgrenze ppm-Werte von 0,8 bis 1,7 erreicht, die somit bei 10 %, also deutlich unter der im Stand der Technik angegebenen bisherigen Nachweisgrenze, liegen.

**Tabelle 3**

| **Ti** | **Standard Name** | **Int.Net.** | **Conc.Chem.** | **Conc.XRF** | **Abs.Dev.** | **Rel.Dev.** | **LLD (PPM)** |
|---|---|---|---|---|---|---|---|
| (Fig. 5) | HP14-Null | 0,151 | 0,0000 | 0,0005 | 4,80 | | 0,8 |
| | HP14-10ppm | 0,433 | 0,0010 | 0,0014 | 3,90 | | 0,8 |
| | HP14-30ppm | 0,706 | 0,0030 | 0,0025 | -4,90 | -16,47 | 0,9 |
| | HP14-50ppm | 1,073 | 0,0050 | 0,0042 | -8,10 | -16,23 | 1 |
| | HP14-100ppm | 2,018 | 0,0100 | 0,0097 | -2,90 | -2,87 | 1,2 |
| | HP14-200ppm | 3,002 | 0,0200 | 0,0200 | -0,40 | -0,22 | 1,7 |
| | HP14-300ppm | 3,649 | 0,0300 | 0,0310 | 9,60 | 3,21 | 2,2 |
| | HP14-500ppm | 4,072 | 0,0500 | 0,0495 | -4,60 | -0,92 | 3,1 |

**Tabelle 4**

| **Mn** | **Standard Name** | **Int.Net.** | **Conc.Chem.** | **Conc.XRF** | **Abs.Dev.** | **Rel.Dev.** | **LLD (PPM)** |
|---|---|---|---|---|---|---|---|
| (Fig. 6) | HP14-Null | 0,2931 | 0,0000 | 0,0000 | -0,1 | | 1,2 |
| | HP14-10ppm | 0,6046 | 0,0010 | 0,0008 | -2,1 | | 1,2 |
| | HP14-30ppm | 1,1590 | 0,0030 | 0,0023 | -6,8 | -22,51 | 1,3 |
| | HP14-50ppm | 1,7251 | 0,0050 | 0,0040 | -9,8 | -19,52 | 1,3 |
| | HP14-100ppm | 3,3615 | 0,0100 | 0,0095 | -4,7 | -4,66 | 1,5 |
| | HP14-200ppm | 5,7046 | 0,0200 | 0,0201 | 0,7 | 0,36 | 1,7 |
| | HP14-300ppm | 7,5155 | 0,0300 | 0,0311 | 11,3 | 3,76 | 2 |
| | HP14-500ppm | 9,2598 | 0,0500 | 0,0495 | -5,1 | -1,02 | 2,5 |

**Tabelle 5**

| **Fe** | **Standard Name** | **Int.Net.** | **Conc.Chem.** | **Conc.XRF** | **Abs.Dev.** | **Rel.Dev.** | **LLD (PPM)** |
|---|---|---|---|---|---|---|---|
| (Fig. 7) | HP14-Null | 0,8052 | 0,0000 | 0,0000 | 0 | | 1,7 |
| | HP14-10ppm | 0,9859 | 0,0010 | 0,0011 | 1 | | 1,7 |
| | HP14-30ppm | 1,2319 | 0,0030 | 0,0027 | -2,6 | -8,74 | 1,8 |
| | HP14-50ppm | 1,4421 | 0,0050 | 0,0043 | -7,5 | -14,961 | 1,8 |
| | HP14-100ppm | 2,1989 | 0,0100 | 0,0099 | -0,9 | -0,881 | 1,9 |
| | HP14-200ppm | 3,2578 | 0,0200 | 0,0200 | 0,3 | 0,152 | 2,2 |
| | HP14-300ppm | 4,2047 | 0,0300 | 0,0313 | 12,7 | 4,225 | 2,4 |
| | HP14-500ppm | 5,143 | 0,0500 | 0,0493 | -7 | -1,39 | 2,8 |

**Tabelle 6**

| **Ni** | **Standard Name** | **Int.Net.** | **Conc.Chem.** | **Conc.XRF** | **Abs.Dev.** | **Rel.Dev.** | **LLD (PPM)** |
|---|---|---|---|---|---|---|---|
| (Fig. 8) | HP14-Null | 0,0343 | 0,0000 | 0,0004 | 4,20 | | 1,7 |
| | HP14-10ppm | 0,1640 | 0,0010 | 0,0013 | 3,30 | | 1,7 |
| | HP14-30ppm | 0,3629 | 0,0030 | 0,0028 | -2,30 | -7,57 | 1,8 |
| | HP14-50ppm | 0,5687 | 0,0050 | 0,0043 | -6,60 | -13,17 | 1,8 |
| | HP14-100ppm | 1,2304 | 0,0100 | 0,0097 | -2,80 | -2,81 | 2 |
| | HP14-200ppm | 2,2308 | 0,0200 | 0,0194 | -5,70 | -2,83 | 2,2 |
| | HP14-300ppm | 3,2471 | 0,0300 | 0,0311 | 10,60 | 3,53 | 2,4 |
| | HP14-500ppm | 4,3909 | 0,0500 | 0,0497 | -3,40 | -0,68 | 2,9 |

**Tabelle 7**

| **Sn** | **Standard Name** | **Int.Net.** | **Conc.Chem.** | **Conc.XRF** | **Abs.Dev.** | **Rel.Dev.** | **LLD (PPM)** |
|---|---|---|---|---|---|---|---|
| (Fig. 9) | HP14-Null | -0,0094 | 0,0000 | -0,0001 | -0,70 | | 1,7 |
| | HP14-10ppm | 0,0946 | 0,0010 | 0,0012 | 1,50 | | 1,8 |
| | HP14-30ppm | 0,175 | 0,0030 | 0,0024 | -5,90 | -19,57 | 2,1 |
| | HP14-50ppm | 0,2582 | 0,0050 | 0,0040 | -9,90 | -19,86 | 2,4 |
| | HP14-100ppm | 0,5414 | 0,0100 | 0,0108 | 7,90 | 7,90 | 3,1 |
| | HP14-200ppm | 0,7065 | 0,0200 | 0,0204 | 3,80 | 1,92 | 4,6 |
| | HP14-300ppm | 0,7776 | 0,0300 | 0,0294 | -6,20 | -2,06 | 6 |
| | HP14-500ppm | 0,9009 | 0,0500 | 0,0501 | 1,40 | 0,28 | 8,7 |

Die folgende **Tabelle 8** zeigt die **Reproduzierbarkeit** des erfindungsgemäßen Verfahrens mit einem erfindungsgemäßen Probenkörper. Die verwendeten Probenkörper wurden ebenfalls aus vier Gramm Böhmit (Al(OH)O) hergestellt, die zu einem Preßling von 40 mm Durchmesser verarbeitet wurden. Von einer Öl-Probe wurden fünf mal jeweils 150 mg auf einen der beschriebenen Probenkörper aufgetragen und auf der Oberfläche gleichmäßig verteilt. Nachdem das Öl von den Probenkörpern aufgesogen war, wurde jeder Probenkörper jeweils einmal mittels Röntgenfluoreszenz unter Vakuum gemessen, wobei jede Messung für die gleiche Auswahl von Elementen des Periodensystems erfolgte. Dabei werden folgende Abkürzungen verwendet:
- Mw: Mittelwert
- ppm: parts per million
- StAbw abs.: Standardabweichung absolut
- StAbw rel.: Standardabweichung relativ

**Tabelle 8**

| **Probe** | | **Na** | **Si** | **P** | **S** | **Ca** | **Ti** | **V** | **Cr** | **Mn** | **Fe** | **Ni** | **Cu** | **Zn** | **Mo** | **Ba** |
|---|---|---|---|---|---|---|---|---|---|---|---|---|---|---|---|---|
| 1 | ppm | 289 | 138 | 119 | 5681 | 260 | 198 | 198 | 162 | 153 | 180 | 111 | 93 | 90 | 29 | 206 |
| 2 | ppm | 284 | 140 | 113 | 5506 | 262 | 196 | 204 | 163 | 163 | 188 | 113 | 91 | 98 | 32 | 211 |
| 3 | ppm | 297 | 136 | 117 | 5697 | 271 | 198 | 200 | 160 | 160 | 188 | 118 | 93 | 98 | 31 | 215 |
| 4 | ppm | 285 | 135 | 112 | 5542 | 277 | 197 | 195 | 161 | 155 | 187 | 115 | 85 | 96 | 29 | 208 |
| 5 | ppm | 291 | 141 | 117 | 5412 | 259 | 190 | 197 | 158 | 155 | 182 | 115 | 89 | 96 | 28 | 207 |
| | | | | | | | | | | | | | | | | |
| Mw | ppm | 289 | 138 | 116 | 5568 | 266 | 196 | 199 | 161 | 157 | 185 | 114 | 90 | 96 | 30 | 209 |
| StAbw abs. | ppm | 5,2 | 2,5 | 3,0 | 120,7 | 7,9 | 3,3 | 3,4 | 1,9 | 4,1 | 3,7 | 2,6 | 3,3 | 3,3 | 1,6 | 3,6 |
| StAbw rel. | % | 1,8 | 1,8 | 2,6 | 2,2 | 3,0 | 1,7 | 1,7 | 1,2 | 2,6 | 2,0 | 2,3 | 3,7 | 3,4 | 5,5 | 1,7 |

Die Messungen der fünf Probenpräparationen zeigen relative Standardabweichungen zwischen 1,7 und 5,5 %. Molibdän (Mo) zeigt mit 5,5 % die höchste Abweichung. Diese ist auf die besonders hohe Eindringtiefe dieses Element und die relativ gering dazu bestrahlte und damit meßbare Schichtdicke.

### Bezugszeichenliste

- 1: starrer Probenkörper
- 1': von ab- und adsorbiertem Stoff (3) getränkter Teil des Probenkörpers
- 2: Meßfläche
- 3: flüssiger oder pastöser Stoff (zu analysierender Stoff)
- Pfeil: Aufbringungsweg des zu analysierenden Stoffs
- 3': als Film aufliegender Stoff (Stoff-Film)
- 4: suspensiertes Elementpartikel im zu analysierenden Stoff
- 5: Pipette

## Patentansprüche

1. Untersuchungsverfahren zur Untersuchung von flüssigen oder pastösen, nicht ausschließlich aus flüchtigen Bestandteilen bestehenden Stoffen (3), wobei die Stoffe (3) mittels eines Verfahrens vorbereitet werden, umfassend die folgenden Schritte:
1) Der zu untersuchende Stoff (3) wird auf einen starren Probenkörper (1) mit mindestens einer ebenen und glatten Messfläche (2) aufgetragen, wobei der starre Probenkörper (1) ein saugfähiges Material aufweist, vorzugsweise aus saugfähigem Material besteht,
2) Der Stoff (3) wird von diesem Probenkörper (1) ad- und absorbiert,
wobei der Probenkörper (1) ein Pressling aus Granulat ist und wobei der Probenkörper mindestens einen der folgenden Stoffe umfasst: ein Tonmineral; Böhmit; Apatit; Tricalziumphophat; Zellulose, und
wobei die Stoffe (3) anschließend mittels Röntgenfluoreszenzanalyse untersucht werden.

2. Untersuchungsverfahren nach dem vorhergehenden Anspruch, wobei die Röntgenfluoreszenzanalyse eine wellenlängendispersive oder eine energiedispersive Röntgenfluoreszenzanalyse ist.

3. Untersuchungsverfahren nach einem der beiden vorhergehenden Ansprüche, wobei in Schritt 1 ein Probenkörper (1) verwendet wird, der in Schritt 2 den Stoff so bindet und/oder hält, dass er auch unter Vakuum gebunden bzw. gehalten bleibt.

4. Untersuchungsverfahren nach einem der drei vorhergehenden Ansprüche, wobei das Verfahren als weiteren (dritten) Schritt aufweist:
3) Der Probenkörper (1) wird zur Entfernung eines Stoff-Films (3') auf Elementpartikeln (4) an der Messfläche (2) einer Hitzebehandlung unterzogen.

5. Untersuchungsverfahren nach einem der vier vorhergehenden Ansprüche, wobei der Probenkörper Aktivkohle umfasst.

6. Verfahren zur Vorbereitung von flüssigen oder pastösen, nicht ausschließlich aus flüchtigen Bestandteilen bestehenden Stoffen (3) für die Röntgenfluoreszenzanalyse, umfassend folgende Schritte:
1) Der zu untersuchende Stoff (3) wird auf einen starren Probenkörper (1) mit mindestens einer ebenen und glatten Messfläche (2) aufgetragen, wobei der starre Probenkörper (1) ein saugfähiges Material aufweist, vorzugsweise aus saugfähigem Material besteht,
2) Der Stoff (3) wird von diesem Probenkörper (1) ad- und absorbiert,
wobei der Probenkörper (1) ein Pressling aus Granulat ist und wobei der Probenkörper aus einem der folgenden Stoffe besteht: einem Tonmineral; Böhmit; Apatit; Tricalziumphophat.

7. Verfahren nach dem vorhergehenden Anspruch, wobei in Schritt 1 ein Probenkörper (1) verwendet wird, der in Schritt 2 den Stoff so bindet und/oder hält, dass er auch unter Vakuum gebunden bzw. gehalten bleibt.

8. Verfahren nach einem der beiden vorhergehenden Ansprüche, wobei das Verfahren als weiteren (dritten) Schritt aufweist:
3) Der Probenkörper (1) wird zur Entfernung eines Stoff-Films (3') auf Elementpartikeln (4) an der Messfläche (2) einer Hitzebehandlung unterzogen.

9. Probenkörper (1) für die Untersuchung von flüssigen oder pastösen Stoffen (3) mit der Röntgenfluoreszenzanalyse nach einem der Ansprüche 1 bis 5, umfassend mindestens eine ebene und glatte Messfläche (2), wobei der Probenkörper aus saugfähigem, starrem Material besteht, wobei der Probenkörper (1) ein Pressling aus Granulat ist und wobei der Probenkörper aus einem der folgenden Stoffe besteht: einem Tonmineral; Böhmit; Apatit; Tricalziumphophat.

10. Probenkörper (1) nach dem vorhergehenden Anspruch, **dadurch gekennzeichnet, dass** das saugfähige, starre Material flüssige bis pastöse Stoffe so fest halten und/oder binden kann, dass sie auch unter Vakuum gehalten bzw. gebunden bleiben.

11. Probenkörper (1) nach einem der beiden vorhergehenden Ansprüche, weiterhin umfassend einen flüssigen oder pastösen, nicht ausschließlich aus flüchtigen Bestandteilen bestehenden Stoff (3), vorbereitet nach einem Verfahren gemäß einem der Ansprüche 6 bis 8.

## Claims

1. Analysis process for analyzing liquid or pasty substances (3) not consisting exclusively of volatile constituents, which substances (3) are prepared by means of a process comprising the following steps:
1) the substance (3) to be analyzed is applied to a rigid sample body (1) with at least one flat and smooth analysis surface (2), said rigid sample body (1) comprising an absorptive material, preferably consisting of absorptive material,
2) the substance (3) is adsorbed and absorbed by this sample body (1), the sample body (1) being a pressing composed of granules and the sample body comprising at least one of the following substances: a clay mineral; boehmite; apatite; tricalcium phosphate; cellulose and
the substances (3) subsequently being analyzed by means of X-ray fluorescence analysis.

2. Analysis process according to the preceding claim, wherein the X-ray fluorescence analysis is a wavelength-dispersive or energy-dispersive X-ray fluorescence analysis.

3. Analysis process according to either of the two preceding claims, wherein the sample body (1) used in step 1 binds and/or retains the substance in step 2 such that it remains bound or retained even under vacuum.

4. Analysis process according to any of the three preceding claims, which comprises, as a further (third) step:
3) the sample body (1) is subjected to a heat treatment to remove a substance film (3') on element particles (4) on the analysis surface (2).

5. Analysis process according to any of the four preceding claims, wherein the sample body comprises activated carbon.

6. Process for preparing liquid or pasty substances (3) not consisting exclusively of volatile constituents for X-ray fluorescence analysis, comprising the following steps:
1) the substance (3) to be analyzed is applied to a rigid sample body (1) with at least one flat and smooth analysis surface (2), said rigid sample body (1) comprising an absorptive material, preferably consisting of absorptive material,
2) the substance (3) is adsorbed and absorbed by this sample body (1),
the sample body (1) being a pressing composed of granules and the sample body consisting of one of the following substances: a clay mineral; boehmite; apatite; tricalcium phosphate.

7. Process according to the preceding claim, wherein the sample body (1) used in step 1 binds and/or retains the substance in step 2 such that it remains bound or retained even under vacuum.

8. Process according to either of the two preceding claims, which comprises, as a further (third) step:
3) the sample body (1) is subjected to a heat treatment to remove a substance film (3') on element particles (4) on the analysis surface (2).

9. Sample body (1) for the analysis of liquid or pasty substances (3) by X-ray fluorescence analysis according to any of Claims 1 to 5, comprising at least one flat and smooth analysis surface (2), wherein said sample body consists of absorptive, rigid material, the sample body (1) being a pressing composed of granules and the sample body consisting of one of the following substances: a clay mineral; boehmite; apatite; tricalcium phosphate.

10. Sample body (1) according to the preceding claim, **characterized in that** the absorptive, rigid material can retain and/or bind liquid to pasty substances sufficiently firmly that they remain retained or bound even under vacuum.

11. Sample body (1) according to either of the two preceding claims, further comprising a liquid or pasty substance (3) not consisting exclusively of volatile constituents, prepared by a process according to any of Claims 6 to 8.

## Revendications

1. Procédé d'analyse pour l'analyse de matières fluides ou pâteuses (3), non constituées exclusivement de constituants volatils, les matières (3) étant préparées par un procédé comprenant les étapes suivantes :
1) la matière (3) à analyser est appliquée sur un élément d'analyse d'échantillon rigide (1) comprenant au moins une surface de mesure plane et lisse (2), l'élément d'analyse d'échantillon rigide (1) comprenant un matériau absorbant, de préférence étant constitué par un matériau absorbant,
2) la matière (3) est ad- et absorbée par cet élément d'analyse d'échantillon (1),
l'élément d'analyse d'échantillon (1) étant un comprimé de granulat et l'élément d'analyse d'échantillon comprenant au moins une des matières suivantes : un minéral argileux ; de la boéhmite ; de l'apatite ; du phosphate de tricalcium ; de la cellulose ; et
les matières (3) étant ensuite analysées par analyse de fluorescence X.

2. Procédé d'analyse selon la revendication précédente, dans lequel l'analyse de fluorescence X est une analyse de fluorescence X dispersive en longueur d'onde ou dispersive en énergie.

3. Procédé d'analyse selon l'une quelconque des deux revendications précédentes, dans lequel un élément d'analyse d'échantillon (1) qui lie et/ou retient la matière à l'étape 2 de manière à ce qu'elle reste liée ou retenue même sous vide est utilisé à l'étape 1.

4. Procédé d'analyse selon l'une quelconque des trois revendications précédentes, dans lequel le procédé comprend en tant qu'étape supplémentaire (troisième étape) :
3) l'élément d'analyse d'échantillon (1) est soumis à un traitement thermique pour l'élimination d'un film de matière (3') sur des particules élémentaires (4) sur la surface de mesure (2).

5. Procédé d'analyse selon l'une quelconque des quatre revendications précédentes, dans lequel l'élément d'analyse d'échantillon comprend du charbon actif.

6. Procédé de préparation de matières fluides ou pâteuses (3), non constituées exclusivement de constituants volatils, pour l'analyse de fluorescence X, comprenant les étapes suivantes :
1) la matière (3) à analyser est appliquée sur un élément d'analyse d'échantillon rigide (1) comprenant au moins une surface de mesure plane et lisse (2), l'élément d'analyse d'échantillon rigide (1) comprenant un matériau absorbant, de préférence étant constitué par un matériau absorbant,
2) la matière (3) est ad- et absorbée par cet élément d'analyse d'échantillon (1),
l'élément d'analyse d'échantillon (1) étant un comprimé de granulat et l'élément d'analyse d'échantillon étant constitué d'une des matières suivantes : un minéral argileux ; de la boéhmite ; de l'apatite ; du phosphate de tricalcium.

7. Procédé selon la revendication précédente, dans lequel un élément d'analyse d'échantillon (1) qui lie et/ou retient la matière à l'étape 2 de manière à ce qu'elle reste liée ou retenue même sous vide est utilisé à l'étape 1.

8. Procédé selon l'une quelconque des deux revendications précédentes, dans lequel le procédé comprend en tant qu'étape supplémentaire (troisième étape) :
3) l'élément d'analyse d'échantillon (1) est soumis à un traitement thermique pour l'élimination d'un film de matière (3') sur des particules élémentaires (4) sur la surface de mesure (2).

9. Élément d'analyse d'échantillon (1) pour l'analyse de matières fluides ou pâteuses (3) par analyse de fluorescence X selon l'une quelconque des revendications 1 à 5, comprenant au moins une surface de mesure plane et lisse (2), l'élément d'analyse d'échantillon étant constitué d'un matériau rigide absorbant, l'élément d'analyse d'échantillon (1) étant un comprimé d'un granulat et l'élément d'analyse d'échantillon étant constitué d'une des matières suivantes : un minéral argileux ; de la boéhmite ; de l'apatite ; du phosphate de tricalcium.

10. Élément d'analyse d'échantillon (1) selon la revendication précédente, **caractérisé en ce que** le matériau rigide absorbant peut retenir et/ou lier la matière fluide à pâteuse si solidement qu'elle reste retenue ou reliée même sous vide.

11. Élément d'analyse d'échantillon (1) selon l'une quelconque des deux revendications précédentes, comprenant également une matière fluide ou pâteuse (3), non constituée exclusivement de constituants volatils, préparé par un procédé selon l'une quelconque des revendications 6 à 8.
